# EUROPÄISCHE PATENTSCHRIFT

(11) **EP 2 399 783 B1**
(45) Veröffentlichungstag und Bekanntmachung des Hinweises auf die Patenterteilung: **01.10.2014**
(21) Anmeldenummer: 11466016.0
(22) Anmeldetag: 24.06.2011
(51) Int. Cl.: B60R 5/04

(54) **Kulissenmechanismus der Bodenplatte des Fahrzeugkofferraumes**
Slot arrangement for the floor of a vehicle luggage compartment
Mécanisme de coulisse de la plaque de fond du coffre d'un véhicule

(30) Priorität: 23.06.2010 CZ 20100492
(43) Veröffentlichungstag der Anmeldung: 28.12.2011
(73) Patentinhaber: Skoda Auto A.S., 293 60 Mladá Boleslav (CZ)
(72) Erfinder: Baloun, Jan, 66471 Veverska Bityska (CZ); Jiroutek, Radek, 53304 Sezemice (CZ)

(56) Entgegenhaltungen:
- EP-A1- 1 728 684
- EP-A1- 2 048 031
- EP-B1- 1 501 702
- US-A1- 2006 016 840

## Beschreibung

### Technisches Gebiet

Die Erfindung betrifft ein in der Seitenverkleidung des Kofferraumes ausgebildetes Kulissenmechanismus, in dem beweglich eine Bodenplatte des Fahrzeugkofferraumes befestigt ist.

### Bisheriger Stand der Technik

Derzeit sind verschiedene Ausführungen des durch eine zusätzliche Bodenplatte ausgebildeten erhöhten Ladebodens im Kofferraum bekannt. Diese Bodenplatte ist im Kofferraum vertikal verschiebbar oder sie kann nach vertikaler Anhebung auch über die hintere Kante des Kofferraumes herausgeschoben werden. Zu diesem Zweck sind verschiedene Ausführungen bekannt, die eine in der Seitenverkleidung angeordnete Kulissenplatte verwenden. Die Bodenplatte weist an beiden Seiten verschiedene Bolzen, Nocken, Laufrollen usw. auf, welche in die vordefinierte Führungsbahn der Kulissenplatte eingreifen und dort sich bewegen.

Im Dokument EP1728684 ist eine Einrichtung beschrieben, die eine an den Seitenwänden mit zwei parallelen und identischen Platten bzw. Kulissenplatten abgestützte Bodenplatte aufweist. Diese Kulissenplatten sind gegeneinander angeordnet und erstrecken sich von der unteren Basis bis zum oberen Teil des Kofferraumes hin. Jede Kulissenplatte weist ein Zick-Zack-Profil sowie geschichtete, mit schrägen Verbindungsteilen verbundene horizontale Segmente auf, wobei jedes Segment eine Rückstellposition für die Anordnung des Nockens hat. Die Kulissenplatten sind mit ihren Seitenwänden offen und gegen die jeweilige Plattenseite so angeordnet, dass die Bodenplatte mittels des gleitenden Nockens gehalten und geführt wird. Der Nocken umfasst einen zylindrischen Stift, der im Wesentlichen einen Viereckprofil hat, dessen Höhe im Wesentlichen der Tiefe der Kulissenplatte entspricht. Der Nachteil dieser Lösung liegt in der komplizierten Zick-Zack-Lösung der Kulissenbahnen, wo bei dem Übergang aus der unteren in die obere Position die Bodenplatte mehrmals schwierig geschwenkt, heraus- und eingeschoben werden muss.

Im weiteren Dokument EP1501702 ist die Lösung eines herausschiebbaren Ladebodens im Fahrzeug beschrieben, der an jeder Seite zwei Laufrollen aufweist. Diese Laufrollen sind im Eingriff in den Führungsbahnen für das Anheben und Herausschieben des Ladebodens angepasst. Die Laufrollen greifen in die Kulissenführung der Führungsbahnen ein und sind im Wesentlichen seitlich an der Bodenplatte so angeordnet, dass der erste Paar der Laufrollen in den ersten Abschnitt der Kulissenführung und der zweite Paar der Laufrollen in den zweiten Abschnitt der Kulissenführung der Führungsbahnen eingreift. Für den Antrieb der Laufrollen umfasst diese Lösung eine in der Bodenplatte integrierte Antriebseinheit, die zum Anheben und/oder Herausschieben und/oder Einziehen und/oder Einsenken der Bodenplatte dient. Mindestens ein Paar der Laufrollen, einschließlich des jeweiligen Abschnitts der Kulissenführung, weist ein Antriebselement auf. Der Nachteil dieser Lösung liegt darin, dass der Ladeboden nur zwei Positionen hat und zwar die eingeschobene Position am Boden des Kofferraumes und die Nutzposition, wenn die Bodenplatte aus dem Kofferraum herausgeschoben ist.

### Darstellung der Erfindung

Die Aufgabe wird durch einen Kulissenmechanismus der Bodenplatte im Fahrzeugkofferraum gelöst, der zum Anheben dieser Platte dient. Der Kulissenmechanismus ist in der Seitenverkleidung spiegelbildlich an beiden Seiten des Fahrzeugkofferraumes ausgebildet und erstreckt sich vom Boden zum oberen Teil des Kofferraumes hin. Die auf der gesamten Fläche des Kofferraumes untergebrachte Bodenplatte umfasst an beiden Seiten an der Stelle des Kulissenmechanismus im Wesentlichen seitlich an der Ladeplatte in bestimmter Entfernung voneinander angeordneten vorderen und hinteren Bolzen, die in den Kulissenmechanismus eingreifen. Dieser Kulissenmechanismus umfasst eine Kulissenplatte, die aus einer Basis, einem vorderen unteren Abschnitt, vorderen oberen Abschnitt, hinteren unteren Abschnitt und hinteren oberen Abschnitt besteht.

Die Darstellung der Erfindung liegt darin, dass der Kulissenmechanismus eine vordere Kulissenführung aufweist, die an der Kulissenplatte ausgebildet ist und von der Basis in dem vorderen unteren Bereich im Wesentlichen bogenartig diagonal zum hinteren oberen Bereich verläuft. Die vordere Kulissenführung weist eine Verzweigungsstelle auf, die an der vorderen Kulissenführung in einer Entfernung ausgebildet ist, welche der Entfernung beider Bolzen vom oberen Ende der vorderen Kulissenführung entspricht. Die vordere Kulissenführung weist auch eine Überkreuzungsstelle auf, die in einer Entfernung ausgebildet ist, welche der Entfernung beider Bolzen vom unteren Ende der vorderen Kulissenführung entspricht.

Der Kulissenmechanismus weist weiter eine hintere Kulissenführung auf, die an der Kulissenplatte ausgebildet ist und von der Basis vom hinteren unteren Bereich im Wesentlichen bogenartig diagonal hin zum vorderen oberen Bereich verläuft, wobei der Abschnitt zwischen dem unteren Ende der hinteren Kulissenführung und der Überkreuzungsstelle entlang des Umfangs eines Kreises ausgebildet ist, dessen Mittelpunkt im unteren Ende der vorderen Kulissenführung liegt und der Halbmesser der Entfernung zwischen den Bolzen der Bodenplatte entspricht.

Der Kulissenmechanismus umfasst auch eine seitliche Kulissenführung, die an der Kulissenplatte von der Verzweigungsstelle, in der sie mit der vorderen Kulissenführung verbunden ist, entlang des Umfangs eines Kreises ausgebildet ist, dessen Mittelpunkt im oberen Ende der vorderen Kulissenführung liegt und der Halbmesser der Entfernung zwischen den Bolzen hin zu dem vorderen oberen Abschnitt entspricht. Das obere Ende der seitlichen Kulissenführung und das obere Ende der vorderen Kulissenführung sind im Wesentlichen in gleicher horizontaler Ebene.

Ferner umfasst der Kulissenmechanismus eine am oberen Rand der Kulissenplatte über das obere Ende der vorderen Kulissenführung ausgestaltete Öffnung, die zum Herausnehmen der Bolzen und somit auch der kompletten Kulissenplatte aus dem Kofferraum dient.

Die Kulissenplatte des Kulissenmechanismus umfasst eine Aufklaffung für das Verrücken des hinteren Bolzens in die senkrechte oder Schräglage. Die Kulissenplatte des Kulissenmechanismus weist eine Feststellkerbe für die senkrechte Lage der Bodenplatte auf, wobei die Entfernung der Feststellkerbe vom unteren Ende der vorderen Kulissenführung größer als die Distanz zwischen den Bolzen ist. Die Platte des Kulissenmechanismus weist einen Sperreinschnitt für die Schräglage der Bodenplatte auf, wobei die Entfernung des Sperreinschnittes vom unteren Ende der vorderen Kulissenführung größer als die Distanz zwischen den Bolzen ist.

Gegenüber dem genannten Stand der Technik bietet diese Ausführung des Kulissenmechanismus den Vorteil einer höheren Nutzungsvariabilität, d.h. die Nutzung der Bodenplatte in mehreren Lagen.

### Übersicht der Figuren der Zeichnungen

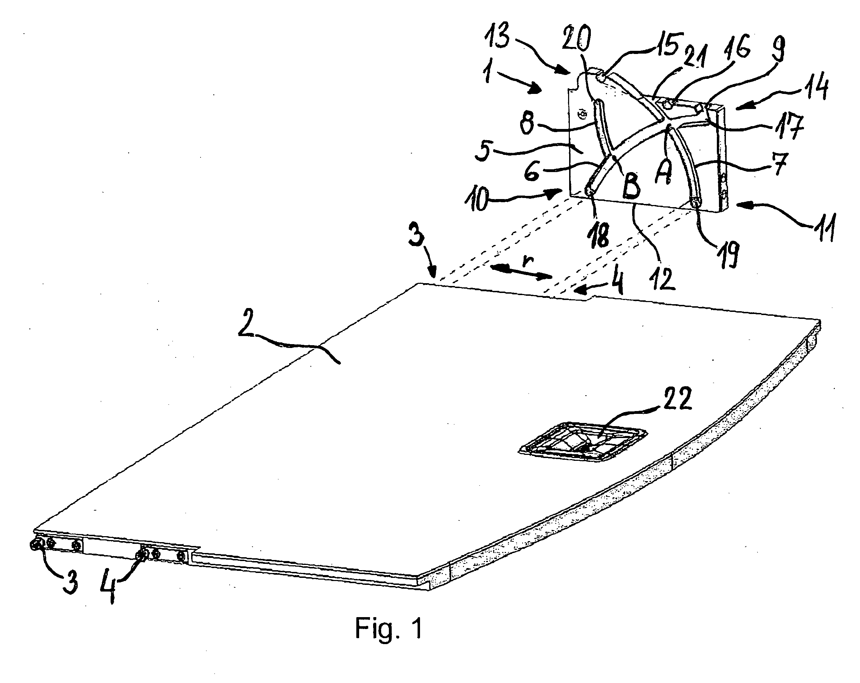

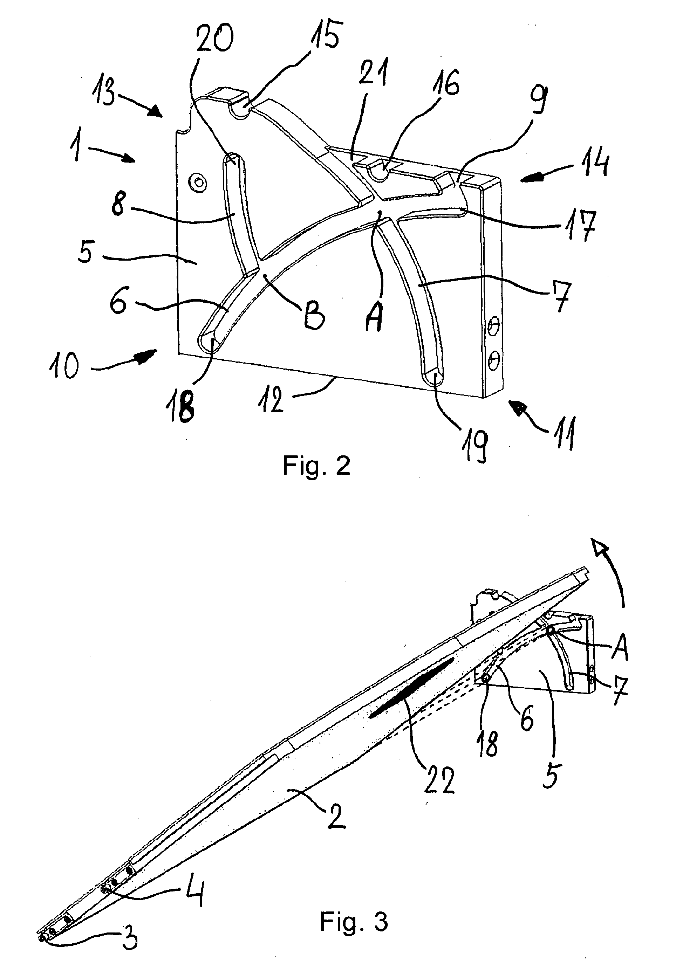

Die Fig. 1 stellt den Kulissenmechanismus der Bodenplatte des Fahrzeugkofferraumes in perspektivischer Ansicht mit anschaulicher Projektion der Bolzen in die Kulissenführung der Kulissenplatte des Kulissenmechanismus, die Fig. 2 die Kulissenplatte des Kulissenmechanismus in einer perspektivischen Seitenansicht, die Fig. 3 bis 8 die Handhabung und Verstellung der Bodenplatte in verschiedene Lagen in einer perspektivischen Ansicht dar.

### Ausführungsbeispiele der Erfindung

Der Kulissenmechanismus 1 der Bodenplatte 2 des Fahrzeugkofferraumes nach Fig. 1 und 2 dient zum Anheben der Bodenplatte 2 und ist in der Seitenverkleidung spiegelbildlich an beiden Seiten des Kofferraumes in der Nähe der Rückwand der Fahrzeughintersitze ausgebildet. Der Kulissenmechanismus 1 erstreckt sich vom Boden des Kofferraumes hin zu seinem oberen Bereich. Die Bodenplatte 2 ist auf der gesamten Fläche des Kofferraumes untergebracht und umfasst an beiden Seiten der Seitenverkleidung an der Stelle des Kulissenmechanismus 1 im Wesentlichen seitlich an der Bodenplatte 2 einen vorderen 3 und hinteren Bolzen 4. Die Bolzen 3, 4 sind voneinander in einer vordefinierten Distanz r entfernt und für die Einsenkung in den Kulissenmechanismus 1 angepasst. Nach Fig. 1 und 2 umfasst der Kulissenmechanismus 1 eine im Wesentlichen rechteckförmige Kulissenplatte 5, die eine Basis 12 und in ihren Ecken einen vorderen unteren Bereich 10, vorderen oberen Bereich 13, hinteren unteren Bereich 11 und hinteren oberen Bereich 14 aufweist.

An der Kulissenplatte 5 ist eine vordere Kulissenführung 6 ausgebildet, die von der Basis 12 aus dem vorderen unteren Bereich 10 im Wesentlichen bogenartig diagonal hin zum hinteren oberen Bereich 14 führt. Die vordere Kulissenführung 6 umfasst eine Verzweigungsstelle B, die an der vorderen Kulissenführung 6 in der Entfernung r vom oberen Ende 17 der vorderen Kulissenführung 6 ausgebildet ist. Die vordere Kulissenführung 6 umfasst auch eine Überkreuzungsstelle A, die in der Entfernung r vom unteren Ende 18 der vorderen Kulissenführung 6 ausgebildet ist.

An der Kulissenplatte 5 ist eine hintere Kulissenführung 7 ausgebildet, die von der Basis 12 aus dem hinteren unteren Bereich 11 im Wesentlichen bogenartig diagonal zum vorderen oberen Bereich 13 führt. Der Abschnitt der hinteren Kulissenführung 7 zwischen dem unteren Ende 19 der hinteren Kulissenführung 7 und der Überkreuzungsstelle A ist entlang des Umfangs eines Kreises ausgebildet, dessen Mittelpunkt im unteren Ende 18 der vorderen Kulissenführung 6 liegt und dessen Halbmesser der Distanz r der Bolzen 3 und 4 entspricht.

An der Kulissenplatte 5 ist weiter eine seitliche Kulissenführung 8 ausgebildet. Diese seitliche Kulissenführung 8 ist an der Kulissenplatte von der Verzweigungsstelle B entlang des Umfangs eines Kreises ausgebildet, dessen Mittelpunkt im oberen Ende 17 der vorderen Kulissenführung 6 liegt und dessen Halbmesser der Distanz r der Bolzen 3, 4, hin zu dem vorderen hinteren Bereich 13 entspricht. Diese seitliche Kulissenführung 8 ist in der Verzweigungsstelle B mit der vorderen Kulissenführung 6 verbunden. Das obere Ende 20 der seitlichen Kulissenführung 8 und das obere Ende 17 der vorderen Kulissenführung 6 liegen im Wesentlichen in gleicher horizontalen Ebene. Die vordere 6, hintere 7 und seitliche Kulissenführung 8 haben eine Tiefe und Breite der Führung, welche der Länge und dem Durchmesser der Bolzen 3 und 4 entsprechen, d.h. dass sie für das Eingreifen und folgende Bewegung der Bolzen 3, 4 in vordefinierten Bahnen in diesen Führungen 6, 7, 8 angepasst sind.

Auf dem oberen Rand der Kulissenplatte 5 des Kulissenmechanismus 1 ist eine Öffnung 9 ausgebildet, die mit dem oberen Ende 17 der vorderen Kulissenführung 6 verbunden ist. So ausgebildete Öffnung 9 dient zum Herausnehmen der Bolzen 3, 4 und somit auch der kompletten Kulissenplatte 5 aus dem Kulissenmechanismus 1.

In hinterer Kulissenführung 7 an dem oberen Rand der Kulissenplatte 5 des Kulissenmechanismus 1 ist eine Aufklaffung 21 ausgebildet. So ausgebildete Aufklaffung 21 ermöglicht das Verrücken des hinteren Bolzens 4 und zwar in die senkrechte sowie in die Schräglage der Bodenplatte 2. Für die senkrechte Lage der Bodenplatte 2 ist an dem oberen Rand des vorderen oberen Bereich 13 der Kulissenplatte 5 eine Feststellkerbe 15 ausgebildet, die für die Einsenkung des hinteren Bolzens 4 angepasst ist. Die Entfernung der Feststellkerbe 15 vom unteren Ende 18 der vorderen Kulissenführung 6 ist größer als die Distanz r zwischen den Bolzen 3, 4, damit die Einsenkung des hinteren Bolzens 4 in die Feststellkerbe 15 ermöglicht wird.

Für die Schräglage der Bodenplatte 2 ist in der Nähe der Aufklaffung 21 auf dem oberen Rand der Kulissenplatte 5 ein Sperreinschnitt 16 ausgebildet, der für die Einsenkung des hinteren Bolzens 4 angepasst ist. Die Entfernung des Sperreinschnitts 16 vom unteren Ende 18 der vorderen Kulissenführung 6 ist größer als die Distanz r zwischen den Bolzen 3, 4, damit das Einrasten des hinteren Bolzens 4 in die Feststellkerbe 15 ermöglicht wird.

In der Grundposition nach Fig. 1 ist die Bodenplatte 1 horizontal auf dem Kofferraumboden abgelegt und ihre Bolzen im Kulissenmechanismus 1 eingesenkt und zwar so, dass der vordere Bolzen 3 sich im vorderen unteren Bereich 10 der Kulissenplatte 5 eingelegt im unteren Ende 18 der vorderen Kulissenführung 6 befindet und der hintere Bolzen 4 sich im hinteren unteren Bereich 11 der Platte 5 eingelegt im unteren Ende 19 der hinteren Kulissenführung 7 befindet. Die Konstruktion des Kulissenmechanismus 1 erlaubt die Verstellung der Bodenplatte 2 in die erhöhte horizontale Lage, senkrechte Lage, Schräglage sowie das Herausnehmen der Bodenplatte 2 aus dem Kofferraum.

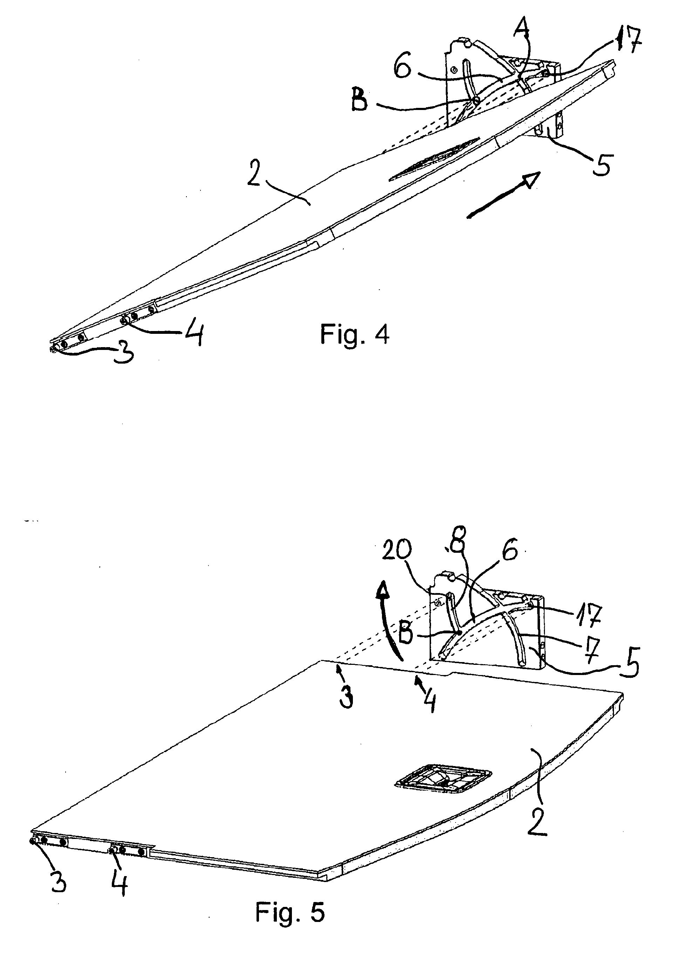

Die Handhabung, d.h. die Verstellung aus der Grundposition in die erhöhte horizontale Lage ist so ausgeführt, dass zuerst die Bodenplatte 2 am Griff 22 gefasst und in der Pfeilrichtung nach Fig. 3 angehoben wird und zwar so, dass der vordere Bolzen 3 im unteren Ende 18 der vorderen Kulissenführung 6 eingesenkt bleibt und eine Drehmitte bildet, um die sich der hintere Bolzen 4 dreht und so der Bolzen 4 in der hinteren Kulissenführung 7 nach oben bis zur Überkreuzungsstelle A d.h. in die erste Zwischenposition bewegt wird. Durch weitere Bewegung in der Pfeilrichtung nach Fig. 4 wird der Bolzen 4 aus der Überkreuzungsstelle A d.h. aus der ersten Zwischenposition in das obere Ende 17 der vorderen Kulissenführung 6 verschoben und zugleich der vordere Bolzen 3 aus dem unteren Ende 18 der vorderen Kulissenführung 6 in die Verzweigungsstelle B verschoben. Durch nachfolgende Rotationsbewegung in der Pfeilrichtung nach Fig. 5, mit der Drehmitte im Bolzen 4, der im oberen Ende 17 der vorderen Kulissenführung 6 eingelegt ist, wird der vordere Bolzen 3 in der seitlichen Kulissenführung 8 von der Verzweigungsstelle B in das obere Ende 20 dieser seitlichen Kulissenführung 8 verschoben. Durch das Eigengewicht der Bodenplatte 2 sind die Bolzen 3, 4 in ihren Positionen versperrt, die im Wesentlichen in gleicher horizontaler Ebene sind.

Die Verstellung aus der Grundposition in die senkrechte Position wird so vorgenommen, dass die Verstellung aus der Grundposition in die erste Zwischenposition identisch mit der oben beschriebenen Verstellung in die erhöhte horizontale Position nach Fig. 3 ist. Weiter folgt, mit der Mitte im vorderen Bolzen 3, weitere Bewegung des Bolzens 4 in der hinteren Kulissenführung 7 in der Pfeilrichtung nach Fig. 6 bis zur zweiten Zwischenposition, wo sich der hintere Bolzen 4 in der Aufklaffung 21 befindet. Ferner folgt der hintere Bolzen 4 in der Pfeilrichtung nach Fig. 7, bis er in die Feststellkerbe 15 einsenkt, wo der Bolzen 4 versperrt wird.

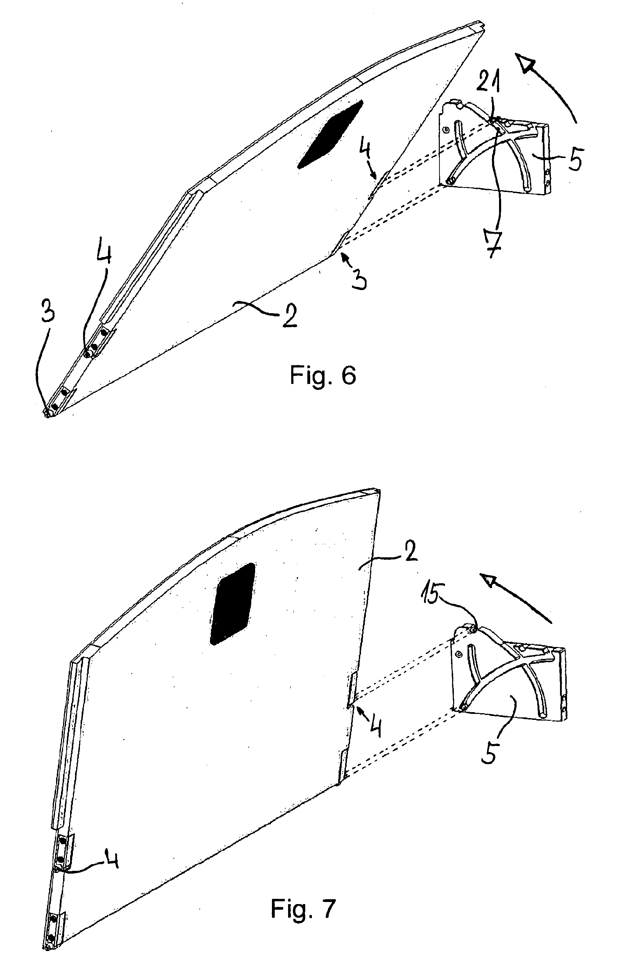

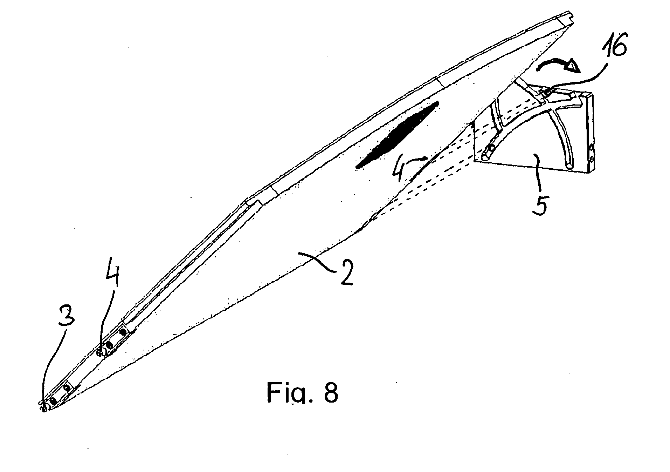

Die Verstellung aus der Grundposition in die Schräglage ist so ausgeführt, dass die Verstellung aus der Grundposition in die zweite Zwischenposition gleich wie die oben beschrieben Verstellung in die senkrechte Position nach Fig. 3 und 6 ist. Ferner verschiebt sich der hintere Bolzen 4 in der Pfeilrichtung nach Fig. 8 über den oberen Rand der Kulissenplatte 5, bis er in den Sperreinschnitt 16 einrastet, in dem der Bolzen 4 versperrt wird.

Über die oben genannte erste und zweite Zwischenposition kann die Bodenplatte 2 allerlei aus beliebiger oben genannten Position in beliebige oben genannte Position verschoben werden. Bei der Positionsänderung muss die Bodenplatte nicht jedesmal in die Grundposition verstellt werden.

Die Herausnahme der Bodenplatte 2 aus der Kulissenplatte 5 und auch aus dem Kofferraum erfolgt so, dass die Bodenplatte 2 in die bereits bekannte, oben genannte Position nach Fig. 4 verstellt wird und über die Öffnung 9 der hintere Bolzen 4 ausgeschoben wird. Danach erfolgt durch die Anhebung der Bodenplatte nach oben die Verstellung des vorderen Bolzens 3 bis in das obere Ende 17 der vorderen Kulissenführung 6 und durch die nachfolgende Bewegung nach oben die Herausschiebung des Bolzens 3 über die Öffnung 9.

### Gewerbliche Anwendbarkeit

Der erfindungsgemäße Kulissenmechanismus kann in allen Automobilen, insbesondere dann bei Personenkraftfahrzeugen des Kombi-Typs eingesetzt und vorteilhaft beispielsweise an den Seitenwänden des Fahrzeugkofferraumes angeordnet werden.

### Verwendete Bezeichnungen

- 1: Kulissenmechanismus
- 2: Bodenplatte
- 3: vorderer Bolzen der Bodenplatte
- 4: hinterer Bolzen der Bodenplatte
- 5: Kulissenplatte des Kulissenmechanismus
- 6: vordere Kulissenführung
- 7: hintere Kulissenführung
- 8: seitliche Kulissenführung
- 9: Öffnung in der Kulissenplatte des Kulissenmechanismus
- 10: vorderer unterer Bereich der Kulissenplatte des Kulissenmechanismus
- 11: hinterer unterer Bereich der Kulissenplatte des Kulissenmechanismus
- 12: Basis der Kulissenplatte des Kulissenmechanismus
- 13: vorderer oberer Bereich der Kulissenplatte des Kulissenmechanismus
- 14: hinterer oberer Bereich der Kulissenplatte des Kulissenmechanismus
- 15: Feststellkerbe an der Kulissenplatte für die senkrechte Lage
- 16: Sperreinschnitt an der Platte für die Schräglage
- 17: oberes Ende der vorderen Kulissenführung
- 18: unteres Ende der vorderen Kulissenführung
- 19: unteres Ende der hinteren Kulissenführung
- 20: oberes Ende der seitlichen Kulissenführung
- 21: Aufklaffung der hinteren Kulissenführung
- 22: Griff der Bodenplatte
- r: Distanz zwischen dem vorderen und hinteren Bolzen
- A: Überkreuzungsstelle der vorderen und hinteren Kulissenführung
- B: Verzweigungsstelle der vorderen und seitlichen Kulissenführung

## Patentansprüche

1. Der Kulissenmechanismus (1) der Bodenplatte (2) des Fahrzeugkofferraumes der zum Anheben der Bodenplatte (2) dient, ist in der Seitenverkleidung spiegelbildlich an beiden Seiten des Fahrzeugkofferraumes ausgebildet und vom Boden zum oberen Teil des Kofferraumes sich hin erstreckt, wo die Bodenplatte (2) auf der gesamten Fläche des Kofferraumes untergebracht ist und an beiden Seiten an der Stelle des Kulissenmechanismus (1) im Wesentlichen seitlich an der Bodenplatte (2) in der Distanz (r) voneinander angeordneten und in den Kulissenmechanismus (1) eingreifenden vorderen Bolzen (3) und hinteren Bolzen (4) umfasst, wobei der Kulissenmechanismus eine Kulissenplatte (5), welche eine Basis (12), einen vorderen unteren Bereich (10), vorderen oberen Bereich (13), hinteren unteren Bereich (11) und hinteren oberen Bereich (14) aufweist, **dadurch gekennzeichnet, dass** die Kulissenplatte (5) des Kulissenmechanismus (1) umfasst :
eine auf der Kulissenplatte (5) ausgebildete vordere Kulissenführung (6), die von der Basis (12) aus dem vorderen unteren Bereich (10) im Wesentlichen bogenartig diagonal zum hinteren oberen Bereich (14) verläuft, wobei die vordere Kulissenführung (6) eine Verzweigungsstelle (B) umfasst, die an der vorderen Kulissenführung (6) in der Distanz (r) vom oberen Ende (17) der vorderen Kulissenführung (6) ausgebildet ist und eine Überkreuzungsstelle (A), die in einer der Entfernung (18) der vorderen Kulissenführung (6) entsprechenden Distanz (r) ausgebildet ist;
eine auf der Kulissenplatte (5) ausgebildete hintere Kulissenführung (7), die von der Basis (12) aus dem hinteren unteren Bereich (11) im Wesentlichen bogenartig diagonal zum vorderen oberen Bereich (13) verläuft, wobei der Abschnitt der hinteren Kulissenführung (7) zwischen dem unteren Ende (19) der hinteren Kulissenführung (7) und der Überkreuzungsstelle (A) entlang des Umfangs eines Kreises ausgebildet ist, dessen Mittelpunkt im unteren Ende (18) der vorderen Kulissenführung (6) liegt und einen der Distanz (r) entsprechendem Halbmesser hat;
eine auf der Kulissenplatte (5) ausgebildete seitliche Kulissenführung (8), die in der Verzweigungsstelle (B) mit der vorderen Kulissenführung (6) verbunden ist und entlang des Umfangs eines Kreises verläuft, dessen Mittelpunkt im oberen Ende (17) der vorderen Kulissenführung (6) liegt und der Halbmesser der Distanz (r) hin zum vorderen oberen Bereich (13) entspricht, wobei das obere Ende (20) der seitlichen Kulissenführung (8) und das obere Ende (17) der vorderen Kulissenführung (6) im Wesentlichen in gleicher horizontalen Ebene liegen.

2. Der Kulissenmechanismus (1) nach Anspruch 1 **dadurch gekennzeichnet, dass** die Kulissenplatte (5) des Kulissenmechanismus (1) eine Öffnung (9) aufweist, die am oberen Rand der Kulissenplatte (5) mit dem oberen Ende (17) der vorderen Kulissenführung (6) verbunden ist und zur Herausnahme der Bolzen (3, 4) und so auch der gesamten Kulissenplatte (5) aus dem Kulissenmechanismus (1) ausgebildet ist.

3. Der Kulissenmechanismus (1) nach Anspruch 1 **dadurch gekennzeichnet, dass** die Kulissenplatte (5) des Kulissenmechanismus (1) eine Aufklaffung (21) aufweist, die in der hinteren Kulissenführung (7) auf dem oberen Rand der Kulissenplatte (5) für die Verstellung des hinteren Bolzens (4) und so auch der Bodenplatte (2) in die senkrechte oder Schräglage ausgebildet ist.

4. Der Kulissenmechanismus (1) nach vorgenannten Ansprüchen **dadurch gekennzeichnet, dass** die Kulissenplatte (5) des Kulissenmechanismus (1) eine Feststellkerbe (15) für die senkrechte Position der Bodenplatte (2) aufweist, wobei die Entfernung der Feststellkerbe (15) vom unteren Ende (18) der vorderen Kulissenführung (6) größer als die Distanz (r) zwischen den Bolzen (3, 4) ist.

5. Der Kulissenmechanismus (1) nach vorgenannten Ansprüchen **dadurch gekennzeichnet, dass** die Kulissenplatte (5) des Kulissenmechanismus (1) einen Sperreinschnitt (16) für die Schräglage der Bodenplatte (2) aufweist, wobei die Entfernung des Sperreinschnitts (16) vom unteren Ende (18) der vorderen Kulissenführung (6) größer als die Distanz (r) zwischen den Bolzen (3, 4) ist.

## Claims

1. The link mechanism (1) of the floor plate (2) of the vehicle luggage compartment, which serves to raise the floor plate (2), is formed in mirror-image fashion in the side trim on both sides of the vehicle luggage compartment and extends from the bottom to the upper part of the luggage compartment, where the floor plate (2) is accommodated on the entire surface of the luggage compartment and, on both sides, at the location of the link mechanism (1), comprises front bolts (3) and rear bolts (4) which are arranged at the distance (r) from one another substantially laterally on the floor plate (2) and engage in the link mechanism (1), wherein the link mechanism has a link plate (5) which has a base (12), a front lower region (10), front upper region (13), rear lower region (11) and rear upper region (14), **characterized in that** the link plate (5) of the link mechanism (1) comprises:
a front link guide (6) which is formed on the link plate (5) and runs, starting from the base (12), from the front lower region (10) substantially in an arcuate manner diagonally to the rear upper region (14), wherein the front link guide (6) comprises a branching point (B) which is formed on the front link guide (6) at the distance (r) from the upper end (17) of the front link guide (6), and a crossing point (A) which is formed at a distance (r) corresponding to the spacing (18) of the front link guide (6);
a rear link guide (7) which is formed on the link plate (5) and runs, starting from the base (12), from the rear lower region (11) substantially in an arcuate manner diagonally to the front upper region (13), wherein the portion of the rear link guide (7) between the lower end (19) of the rear link guide (7) and the crossing point (A) is formed along the circumference of a circle whose centre point is situated in the lower end (18) of the front link guide (6) and has a radius corresponding to the distance (r);
a lateral link guide (8) which is formed on the link plate (5) is connected to the front link guide (6) at the branching point (B) and runs along the circumference of a circle whose centre point is situated in the upper end (17) of the front link guide (6) and the radius corresponds to the distance (r) to the front upper region (13), wherein the upper end (20) of the lateral link guide (8) and the upper end (17) of the front link guide (6) lie substantially in the same horizontal plane.

2. The link mechanism (1) according to Claim 1, **characterized in that** the link plate (5) of the link mechanism (1) has an opening (9) which is connected to the upper end (17) of the front link guide (6) at the upper edge of the link plate (5) and is designed for removing the bolts (3, 4), and thus also the entire link plate (5), from the link mechanism (1).

3. The link mechanism (1) according to Claim 1, **characterized in that** the link plate (5) of the link mechanism (1) has a wide-open gap (21) which is formed in the rear link guide (7) on the upper edge of the link plate (5) for adjusting the rear bolt (4), and thus also the floor plate (2), in the vertical or oblique position.

4. The link mechanism (1) according to the preceding claims, **characterized in that** the link plate (5) of the link mechanism (1) has a locking notch (15) for the vertical position of the floor plate (2), wherein the spacing of the locking notch (15) from the lower end (18) of the front link guide (6) is greater than the distance (r) between the bolts (3, 4).

5. The link mechanism (1) according to the preceding claims, **characterized in that** the link plate (5) of the link mechanism (1) has a blocking incision (16) for the oblique position of the floor plate (2), wherein the spacing of the blocking incision (16) from the lower end (18) of the front link guide (6) is greater than the distance (r) between the bolts (3, 4).

## Revendications

1. Mécanisme de coulisse (1) de la plaque de fond (2) du coffre à bagages d'un véhicule qui sert à soulever la plaque de fond (2), réalisé dans l'habillage latéral avec une symétrie spéculaire des deux côtés du coffre à bagages du véhicule et s'étendant depuis le fond jusqu'à la partie supérieure du coffre à bagages, où la plaque de fond (2) est montée sur toute la surface du coffre à bagages et comprend des boulons avant (3) et arrière (4) disposés à une distance (r) l'un de l'autre des deux côtés à l'emplacement du mécanisme de coulisse (1) essentiellement latéralement au niveau de la plaque de fond (2) et venant en prise dans le mécanisme de coulisse (1), le mécanisme de coulisse présentant une plaque de coulisse (5) qui présente une base (12), une région avant inférieure (10), une région avant supérieure (13), une région arrière inférieure (11) et une région arrière supérieure (14), **caractérisé en ce que** la plaque de coulisse (5) du mécanisme de coulisse (1) comprend :
un guide de coulisse avant (6) réalisé sur la plaque de coulisse (5), lequel s'étend depuis la base (12) à partir de la région avant inférieure (10) essentiellement sous forme d'arc en diagonale vers la région arrière supérieure (14), le guide de coulisse avant (6) comprenant un point de ramification (B), qui est réalisé au niveau du guide de coulisse avant (6) à la distance (r) de l'extrémité supérieure (17) du guide de coulisse avant (6), et un point d'intersection (A) qui est réalisé à une distance (r) correspondant à la distance (18) au guide de coulisse avant (6);
un guide de coulisse arrière (7) réalisé sur la plaque de coulisse (5) qui s'étend depuis la base (12) à partir de la région arrière inférieure (11) essentiellement en forme d'arc en diagonale jusqu'à la région avant supérieure (13), la portion du guide de coulisse arrière (7) entre l'extrémité inférieure (19) du guide de coulisse arrière (7) et le point d'intersection (A) étant réalisée le long de la périphérie d'un cercle dont le centre est situé à l'extrémité inférieure (18) du guide de coulisse avant (6) et présente un demi-diamètre correspondant à la distance (r);
un guide de coulisse latéral (8) réalisé sur la plaque de coulisse (5), qui est connecté au niveau du point de ramification (B) au guide de coulisse avant (6) et s'étend le long de la périphérie d'un cercle dont le centre se situe dans l'extrémité supérieure (17) du guide de coulisse avant (6) et dont le demi-diamètre correspond à la distance (r) vers la région avant supérieure (13), l'extrémité supérieure (20) du guide de coulisse latéral (8) et l'extrémité supérieure (17) du guide de coulisse avant (6) étant situées essentiellement dans le même plan horizontal.

2. Mécanisme de coulisse (1) selon la revendication 1, **caractérisé en ce que** la plaque de coulisse (5) du mécanisme de coulisse (1) présente une ouverture (9) qui est connectée au niveau du bord supérieur de la plaque de coulisse (5) à l'extrémité supérieure (17) du guide de coulisse avant (6) et qui est réalisée pour retirer les boulons (3, 4) et ainsi également l'ensemble de la plaque de coulisse (5) hors du mécanisme de coulisse (1).

3. Mécanisme de coulisse (1) selon les revendications précédentes, **caractérisé en ce que** la plaque de coulisse (5) du mécanisme de coulisse (1) présente une baie (21) qui est réalisée dans le guide de coulisse arrière (7) sur le bord supérieur de la plaque de coulisse (5) pour le déplacement du boulon arrière (4) et donc aussi de la plaque de fond (2) dans la position verticale ou oblique.

4. Mécanisme de coulisse (1) selon les revendications précédentes, **caractérisé en ce que** la plaque de coulisse (5) du mécanisme de coulisse (1) présente une encoche de fixation (15) pour la position verticale de la plaque de fond (2), la distance de l'encoche de fixation (15) à l'extrémité inférieure (18) du guide de coulisse avant (6) étant supérieure à la distance (r) entre les boulons (3, 4).

5. Mécanisme de coulisse (1) selon les revendications précédentes, **caractérisé en ce que** la plaque de coulisse (5) du mécanisme de coulisse (1) présente une entaille de blocage (16) pour la position oblique de la plaque de fond (2), la distance de l'entaille de blocage (16) à l'extrémité inférieure (18) du guide de coulisse avant (6) étant supérieure à la distance (r) entre les boulons (3, 4).
